# FASCICULE DE BREVET EUROPEEN

(11) **EP 2 768 886 B1**
(45) Date de publication et mention de la délivrance du brevet: **12.06.2019**
(21) Numéro de dépôt: 12772950.7
(22) Date de dépôt: 16.10.2012
(51) Int. Cl.: C08G 81/02, C08L 87/00, B60C 1/00

(54) **COMPOSITION DE CAOUTCHOUC CONTENANT UN COPOLYMERE DIENIQUE À AU MOINS DEUX BLOCS ET PNEUMATIQUE LA COMPRENANT**
KAUTSCHUKZUSAMMENSETZUNG ENTHALTEND EIN DIENCOPOLYMER MIT MINDESTENS ZWEI BLÖCKEN, UND DIESEN ENTHALTENDE REIFEN
RUBBER COMPOSITION CONTAINING A DIENE COPOLYMER INCLUDING AT LEAST TWO BLOCKS AND TYRE COMPRISING THE SAME

(30) Priorité: 18.10.2011 FR 1159399
(43) Date de publication de la demande: 27.08.2014
(73) Titulaire: Compagnie Générale des Etablissements Michelin, 63000 Clermont-Ferrand (FR)
(72) Inventeur: MATMOUR, Rachid, F-63040 Clermont-Ferrand Cedex 9 (FR); SEEBOTH, Nicolas, F-63040 Clermont-Ferrand Cedex 9 (FR)
(74) Mandataire: Le Cam, Véronique Marie Christine
(86) Numéro de dépôt international: PCT/EP2012/070452
(87) Numéro de publication internationale: WO 2013/057083

(56) Documents cités:
- ATHANASIOS TOURIS ET AL: "Cyclic and Multiblock Polystyrene- block -polyisoprene Copolymers by Combining Anionic Polymerization and Azide/Alkyne "Click" Chemistry", MACROMOLECULES, vol. 44, no. 7, 12 avril 2011 (2011-04-12) , pages 1969-1976, XP055024293, ISSN: 0024-9297, DOI: 10.1021/ma102900d cité dans la demande
- Matthew Alexander Flack: "Novel Approaches To The Synthesis of Clicked Block Copolymers", , 1 janvier 2010 (2010-01-01), XP055024304, Extrait de l'Internet: URL:http://scholar.lib.vt.edu/theses/avail able/etd-11222010-143912/unrestricted/Flac k_MA_T_2010.pdf [extrait le 2012-04-12]
- ATHANASIOS TOURIS ET AL: "Acetylene-Functionalized Lithium Initiators for Anionic Polymerization. Powerful Precursors for Click Chemistry", MACROMOLECULES, AMERICAN CHEMICAL SOCIETY, WASHINGTON, DC; US, vol. 44, no. 7, 12 avril 2011 (2011-04-12) , pages 1886-1893, XP001561524, ISSN: 0024-9297, DOI: 10.1021/MA102881M [extrait le 2011-02-28] cité dans la demande

## Description

La présente invention concerne des compositions de caoutchouc, notamment en vue d'une application en pneumatiques pour véhicule, contenant des copolymères diéniques à au moins deux blocs, l'un des blocs étant constitué d'un élastomère diénique.

Les compositions de caoutchouc, notamment pour une application en pneu pour véhicule automobile, contiennent généralement des polymères diéniques. Parmi ces polymères diéniques, on compte des copolymères dont certains peuvent être à blocs, au moins un des blocs étant constitué d'un élastomère diénique. La nature des blocs de tels copolymères peut contribuer à améliorer certaines propriétés de la composition. Le choix des blocs doit être fait judicieusement en fonction du type de compromis de propriétés que l'on souhaite atteindre, sachant que l'un au moins des blocs doit être diénique, c'est-à-dire issu de la polymérisation d'au moins un monomère diénique.

La synthèse de copolymères à blocs n'est pas toujours simple à contrôler, en particulier lorsque l'un des monomères peut être impliqué dans des réactions secondaires.

La synthèse de copolymères diéniques à blocs n'échappe pas à cette difficulté. Différents modes de synthèse sont habituellement employés pour préparer de tels copolymères à blocs.

Ainsi, selon un mode de synthèse, on polymérise successivement les deux monomères par polymérisation anionique. C'est une des méthodes les plus connues de l'homme de l'art qui consiste à polymériser le monomère diène par voie anionique, puis à se servir de l'élastomère (chaîne anionique vivante) ainsi obtenu en tant que macro amorceur pour la polymérisation du second monomère toujours par voie anionique.

En fonction de la nature de ce second monomère, certaines difficultés peuvent survenir. Ainsi, au cours de la deuxième étape de polymérisation anionique, des réactions parasites induites par la présence de certaines fonctions sur le second monomère peuvent concurrencer la polymérisation. A titre d'exemple, si une fonction ester est présente sur le second monomère, la polymérisation peut s'accompagner d'une réaction d'addition élimination qui arrête la croissance des chaînes du deuxième bloc et modifie la structure chimique du produit final, donc par conséquent ses propriétés.

D'autre part, la polymérisation anionique de certains monomères est très exothermique et les cinétiques de polymérisation sont très rapides (de l'ordre de la minute). De nombreux travaux ont été publiés traitant d'additifs (LiCI ou ROLi, par exemple) permettant de réduire la réactivité du bout de chaîne par complexation et donc de réduire la proportion de réactions secondaires, avec plus ou moins de succès. Il n'est donc pas aisé de contrôler la polymérisation anionique de tels monomères.

Une autre méthode, développé par Stadler et coll. (Macromolecules 1995, 28, 3080-3097 ; Macromolecules 1995, 28, 4558) et Teyssié et Elf Atochem (Brevets EP 0749987B1 et EP 0524054B1), est l'utilisation de diphénylethylène (DPE) en fin de polymérisation du monomère diénique et la diminution de la température de réaction (-40 °C, par exemple) permettant l'obtention d'un macroamorceur lithié beaucoup moins réactif lors de l'amorçage du second monomère (méth)acrylique. Malgré une réactivité réduite par l'utilisation de DPE et/ou d'un sel de lithium (LiCl ou ROLi, par exemple) et d'une faible température, il est souvent difficile d'éviter totalement les réactions parasites et le contrôle de la polymérisation anionique du second monomère peut rester compliqué.

Un autre mode synthèse de copolymères diéniques à blocs est la combinaison d'une polymérisation anionique et de la polymérisation radicalaire contrôlée par transfert d'atome (ATRP). La synthèse d'un premier bloc diénique par polymérisation anionique peut être suivie d'une réaction de terminaison permettant d'obtenir un polymère fonctionnalisé en bout de chaîne par un groupement halogéné ; cet atome d'halogène permettrait l'amorçage de l'ATRP du deuxième monomère. La fonctionnalisation du bout de chaîne anionique par un atome d'halogène, le brome par exemple, peut s'effectuer en deux étapes : (a) la réaction de la chaîne anionique lithié vivante avec un époxyde dans le but de remplacer le carbanion par un oxanion lithié moins réactif vis-à-vis des substitutions nucléophiles (b) l'oxanion va dans un second temps réagir avec l'halogénure. Seul l'halogénure réagit grâce à la diminution de réactivité du bout de chaîne anionique). Le polymère fonctionnalisé en bout de chaîne par un groupement halogéné pourrait alors servir de macroamorceur pour l'ATRP. Cette voie de synthèse a été utilisée par Matyjaszewski et coll. (Macromol. Chem. Phys. 1999, 200, 1094-1100) pour la synthèse de copolymère à blocs PS-b-PMMA.

Néanmoins, cette méthode s'avère présenter de nombreuses difficultés en fonction des monomères utilisés. En effet, lorsque le composé halogéné utilisé pour fonctionnaliser l'élastomère diénique issu de la polymérisation anionique, présente deux sites halogénés, comme cela est le cas par exemple sur le bromure de 2-bromo-2-methylpropanoyl, la fonctionnalisation peut également conduire à du couplage de chaîne anionique vivante par réaction de deux chaînes d'élastomère diénique vivant sur le composé bihalogéné. En outre, un obstacle majeur de ce mode de synthèse provient de la présence de doubles liaisons pendantes dans le polymère diénique. En effet, au cours de l'ATRP du deuxième monomère, des réactions d'additions radicalaires sur les doubles liaisons de l'élastomère diénique ont lieu conduisant à l'évolution de la macrostructure, voire à de la réticulation conduisant à la formation d'un gel. Le bon contrôle de la polymérisation radicalaire est donc impossible.

Ces inconvénients ont notamment été mis en évidence par les demanderesses lors de divers essais mettant en oeuvre le butadiène et le méthacrylate comme monomères.

Au vu de ce qui précède, le problème technique qui se pose est de fournir des compositions de caoutchouc comprenant un copolymère diénique à au moins deux blocs, dont l'un des blocs est un bloc élastomère diénique, qui soit issu d'un procédé adaptable quel que soit la nature des monomères mis en oeuvre dans cette synthèse, en surmontant notamment les inconvénients cités plus haut, de manière à pouvoir cibler les propriétés de la composition.

La présente invention se propose de résoudre ce problème technique. En effet, les Inventeurs ont mis au point un procédé de synthèse de copolymères diéniques à au moins deux blocs, qui met en oeuvre la réaction des blocs polymères entre eux, chacun étant obtenu séparément selon un mode de polymérisation parfaitement adapté à la nature des monomères. Ceci permet de s'affranchir des inconvénients rencontrés avec les modes de synthèse envisagés précédemment et donne une liberté de choix de la nature des blocs. En outre, ce procédé de synthèse permet d'obtenir les copolymères à blocs dont la macrostructure est contrôlée tout en atteignant des rendements élevés.. Le choix de la nature des blocs peut ainsi être fait judicieusement en fonction du type de compromis de propriétés que l'on souhaite atteindre. Ainsi, une application en pneumatique pour véhicule automobile peut être visée et le choix du type de blocs peut être fait en conséquence.

La présente invention a pour objet une composition de caoutchouc, réticulée ou réticulable, à base d'une charge renforçante et d'un copolymère diénique à au moins deux blocs, l'un au moins des blocs étant constitué d'un élastomère diénique, caractérisé en ce que le copolymère comprend un groupe de liaison entre deux blocs consécutifs comprenant un groupement 1,2,3-triazol-diyle répondant à l'une des formules (D) et (F): 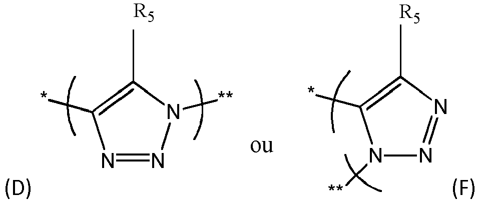
* indiquant un point de liaison vers un bloc du copolymère
** indiquant un point de liaison vers un autre bloc du copolymère
R5 désigne un atome d'hydrogène, un groupe alkyle en C1-C5, cycloalkyle, aryle en C6-C15, arylalkyle en C7-C15 ou un groupement protecteur de fonctions alcynes ;

Un autre objet de l'invention est un pneumatique pour véhicule dont l'un au moins de ses éléments constitutifs comprend une telle composition de caoutchouc.

Ainsi un premier objet de l'invention est une composition de caoutchouc, réticulée ou réticulable, à base d'une charge renforçante et d'un copolymère diénique à au moins deux blocs, l'un au moins des blocs étant constitué d'un élastomère diénique, caractérisé en ce que le copolymère comprend un groupe de liaison entre deux blocs consécutifs comprenant un groupement 1,2,3-triazol-diyle répondant à l'une des formules (D) et (F) ci-dessus.

Le procédé de synthèse d'un tel copolymère diénique comprend une étape de réaction de deux polymères définis comme étant :
a) un élastomère diénique portant une fonction alcyne à une ou chacune de ses extrémités de chaîne, et
b) un polymère portant au moins une fonction azoture.

La réaction de l'élastomère diénique a) sur le polymère b) est une réaction quantitative et sélective entre la fonction azoture et une triple liaison carbone-carbone, encore appelée réaction de cycloaddition 1,3-dipolaire de Huisgen. La réaction présente un rendement élevé, pouvant atteindre 90%, voire 100%..

Cette réaction présente de nombreux avantages supplémentaires. Elle s'effectue dans des conditions opératoires douces, telles qu'à faibles températures, sans produits secondaires ou alors des produits secondaires inoffensifs, sans influence des impuretés, en l'absence de solvants ou alors avec utilisation de solvants non toxiques. Ce qui d'un point de vue industriel représente des avantages économiques, énergétiques et environnementaux non négligeables.

Par élastomère diénique conforme à l'invention, on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatiques ayant de 8 à 20 atomes de carbone.

A titre de diènes conjugués conviennent notamment le butadiène-1,3, le 2-méthyl-1,3-butadiène, les 2,3-di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, etc...

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc...

Les copolymères peuvent contenir entre 99 % et 20 % en poids d'unités diéniques et de 1 % à 80 % en poids d'unités vinylaromatiques.

L'élastomère diénique portant à une ou chacune de ses extrémités de chaîne un groupement comprenant une fonction alcyne conforme à l'invention est choisi préférentiellement dans le groupe des élastomères diéniques fortement insaturés constitué par les polybutadiènes (BR), les polyisoprènes (IR) de synthèse, les copolymères de butadiène, les copolymères d'isoprène et les mélanges de ces élastomères. Les copolymères de butadiène ou d'isoprène sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR).

Conviennent notamment les polybutadiènes ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon ASTM D3418) entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5°C et - 50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

L'élastomère diénique peut être statistique, séquencé ou microséquencé. Il peut avoir toute microstructure appropriée, qui est fonction des conditions particulières de mise en oeuvre de la réaction de polymérisation, telles que la présence ou non d'un agent polaire et/ou randomisant et les quantités d'agent polaire et/ou randomisant employées. Ces aspects sont connus et maîtrisés de l'homme de l'art.

L'introduction d'une fonction alcyne dans un élastomère diénique peut se faire par une polymérisation anionique du monomère diène avec un amorceur organométallique portant une telle fonction.

Ainsi, l'élastomère diénique portant à une ou chacune de ses extrémités de chaîne une fonction alcyne peut être obtenu par polymérisation anionique mettant en oeuvre un amorceur organométallique de polymérisation comprenant une liaison alcyne. Comme groupement protecteur, on entend tout groupement protecteur connu à cet effet, notamment un groupement hydrocarboné comprenant un atome de silicium qui est de préférence un groupement trialkylsilyle, le groupe alkyle possédant 1 à 5 atomes de carbone, et plus préférentiellement le groupement triméthylsilyle.

Comme amorceurs organométallique comprenant une liaison alcyne conviennent notamment ceux comportant une liaison carbone-métal alcalin, de préférence carbone-lithium. A titre d'exemple de tels composés susceptibles d'introduire une fonction alcyne, on peut citer les alcynyllithium, dont la fonction alcyne est protégée ou non, et notamment les trialkylsilyl-alcynyllithium tels que le 5-trimethylsilyl-4-pentynyllithium (TMSPLi) et le 5-triéthylsilyl-4-pentynyllithium (TESPLi) décrits dans les articles Macromolecules 2011, 44, 1886-1893 et Macromolecules 2011, 44, 1969-1976.

Les Inventeurs ont également mis au point de nouveaux amorceurs organométalliques comprenant une fonction alcyne répondant à la formule 1 suivante: 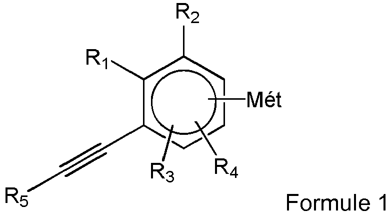 où
Mét, qui peut être porté par la position ortho, méta ou para par rapport au groupement comprenant la triple liaison carbone-carbone, désigne un métal alcalin, de préférence Li, Na ou K, ou un groupement stannyllithium SnLi, préférentiellement Mét désigne un atome de lithium, et
R1, R2, ainsi que R3 et R4 qui peuvent être portés par la position ortho, méta ou para, désignent, indépendamment l'un de l'autre, un atome d'hydrogène, un groupe alkyle en C1-C15, cycloalkyle aryle en C6-C15, arylalkyle en C7-C15, pouvant être séparés du noyau aromatique par un hétéroatome tel que O ou S, et préférentiellement R1, R2, R3 et R4 désignent chacun un atome d'hydrogène,
R5 désigne un groupe alkyle en C1-C15, cycloalkyle, aryle en C6-C15, arylalkyle en C7-C15 ou un groupe protecteur de la fonction alcyne.
A titre de groupe protecteur de la fonction alcyne, on peut citer un groupement hydrocarboné comprenant un atome de silicium qui est de préférence un groupement trialkylsilyle, le groupe alkyle possédant 1 à 5 atomes de carbone, et plus préférentiellement le groupement triméthylsilyle. La nature des substituants de l'atome de silicium n'a pas d'impact sur la polymérisation contrairement à ce qui a été observé avec les amorceurs de l'art antérieur.

Selon des variantes particulières, cet amorceur de polymérisation anionique répond à la formule 1 dans laquelle l'une au moins des caractéristiques suivantes est vérifiée, préférentiellement deux et plus préférentiellement les trois :
- Mét désigne un atome de lithium
- R1, R2, R3 et R4 désignent chacun un atome d'hydrogène
- R5 désigne un groupement trialkylsilyle, le groupe alkyle possédant 1 à 5 atomes de carbone, plus préférentiellement le groupement triméthylsilyle.

Plus particulièrement l'amorceur de polymérisation anionique de formule 1 est choisi parmi les composés triméthylsilylethynylphényl lithium, le groupement triméthylsilyle pouvant être en position ortho, méta ou para par rapport au groupement comprenant la triple liaison carbone-carbone. Ces composés répondent aux formules (A), (B) et (C) suivantes :

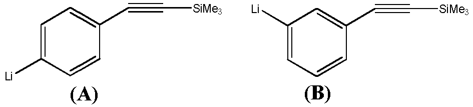

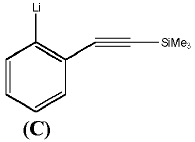

Les composés de formule (A) et (B) ont été décrits dans la littérature comme améliorant les propriétés de résistance à la température des polycarbosilanes dans le domaine des céramiques (Macromolecules 1999, 32(19), 5998-6002) ou pour la synthèse d'oligomère de formule [Cp₂ZrMe(C₆H₃C≡CSiMe₃]n par réaction du sel de lithium avec le composé Cp₂ZrMeCl et thermolyse (Journal of Organometallic Chemistry 1996, 521(1-2), 425-28).

La synthèse de l'amorceur de polymérisation anionique répondant à la formule 1, peut être réalisé par réaction d'échange halogène - métal alcalin par réaction d'un composé halogéné comprenant la fonction alcyne avec un dérivé métallique qui peut être le métal alcalin sous forme métallique ou un sel organique d'un métal alcalin.

Parmi les sels organiques d'un métal alcalin conviennent notamment ceux comportant une liaison carbone-métal alcalin. Selon un mode de réalisation préférentiel de l'invention, le métal alcalin est le lithium. Parmi les sels organiques de lithium on peut citer comme composés représentatifs les organolithiens aliphatiques tels que l'éthyllithium, le n-butyllithium (n-BuLi), l'isobutyllithium, les polyméthylènes dilithium tels que le 1,4-dilithiobutane, etc...

La réaction du composé halogéné comprenant la fonction alcyne avec le dérivé métallique peut s'effectuer dans un solvant inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène ou les mélanges de ces solvants.

La préparation de l'amorceur de polymérisation peut être faite en présence ou non d'un additif polaire, plusieurs types d'agents polaires pouvant être utilisés parmi lesquels des agents polaires non chélatants de type THF et des agents polaires chélatants possédant sur au moins deux atomes au moins un doublet non liant, comme par exemple de type tétrahydrofurfuryl éthyle éther ou tétraméthyléthylènediamine.

La synthèse de l'amorceur de polymérisation est généralement effectuée à une température comprise entre 20°C et 120°C et de préférence voisine de 20°C à 40°C.

Selon une variante de l'invention, l'amorceur de polymérisation peut être préalablement préparé séparément et de manière isolé du milieu de polymérisation.

Selon une autre variante de l'invention, l'amorceur peut être généré in situ directement dans le milieu de polymérisation par contact du composé halogéné avec le dérivé métallique.

A titre d'illustration de ce procédé de synthèse de l'amorceur de polymérisation selon l'invention, on peut se référer à la procédure décrite par Shirai, Yasuhiro et al. dans l'article Journal of the American Chemical Society 2006, 128(41), 13479-13489. Le composé est généré par réaction d'échange halogène/lithium entre le précurseur bromé et le tert-BuLi dans le THF à -80 °C.

Selon une variante particulièrement avantageuse de l'invention, l'amorceur de polymérisation est un composé alcyne répondant à la formule 1 ci-dessus. En effet, cet amorceur permet d'introduire une fonction alcyne en extrémité de chaîne de l'élastomère avec un rendement de fonctionnalisation élevé pouvant atteindre 100%. La polymérisation se fait de manière contrôlée et reproductible sans pénaliser d'éventuelles réactions post-polymérisation telles que des réactions de fonctionnalisation.

La polymérisation est de préférence effectuée de manière connue en soi, en présence d'un solvant inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène ou les mélanges de ces solvants.

La solution à polymériser peut également contenir un agent polaire de type éther, tel que le tétrahydrofurane, ou de type aminé tel que la tétraméthyl-éthylène-diamine. Plusieurs types d'agents polaires peuvent être utilisés parmi lesquels des agents polaires non chélatants de type THF et des agents polaires chélatants possédant sur au moins deux atomes au moins un doublet non liant, comme par exemple de type tétrahydrofurfuryl éthyle éther ou tétraméthyl éthylènediamine.

On peut également ajouter des agents randomisants, tels que les alcoolates de sodium.

La polymérisation peut être effectuée en continu ou en discontinu. On effectue généralement la polymérisation à une température comprise entre 20°C et 120°C et de préférence voisine de 30°C à 90°C, particulièrement de 30°C à 50°C.

La réaction de polymérisation permet de préparer un élastomère diénique vivant portant en extrémité de chaîne un groupement comprenant une fonction alcyne.

Selon une variante de l'invention, la réaction de polymérisation est ensuite stoppée par la désactivation des chaînes vivantes de manière connue en soi. On obtient ainsi un élastomère diénique portant en une extrémité de chaîne une fonction alcyne.

Selon une autre variante de l'invention, l'élastomère diénique vivant issu de la réaction de polymérisation et comprenant une fonction alcyne à l'extrémité non réactive de la chaîne, peut ensuite être fonctionnalisé pour préparer un élastomère diénique fonctionnalisé, couplé ou étoilé selon la nature de l'agent de fonctionnalisation utilisé. Cette fonctionnalisation post-polymérisation est effectuée de manière connue en soi.

La réaction de fonctionnalisation de l'élastomère diénique vivant, peut se dérouler à une température comprise entre -20°C et 100 °C, par addition d'un agent de fonctionnalisation, de couplage et/ou d'étoilage sur les chaînes polymériques vivantes ou inversement.

Selon les cas, la réaction peut être effectuée en solution ou en phase gazeuse tel que décrit par exemple dans le brevet EP1072613 B1 qui concerne la fonctionnalisation par le dioxyde de carbone en vue d'obtenir des polymères mono acide carboxylique.

Les agents de fonctionnalisations peuvent par exemple introduire une ou plusieurs fonctions non-polaires au sein l'élastomère. De tels agents sont connus en soi tels que par exemple Me2SiCl2, MeSiCl3, SiCl4, le 1,6-bis-trichlorosilylhexane, Bu2SnCl2, SnCl4... Ce type de fonctionnalisation améliore par exemple l'interaction entre la charge et l'élastomère ou encore certaines propriétés de l'élastomère fonctionnalisé.

Les agents de fonctionnalisations peuvent également introduire une ou plusieurs fonctions polaires au sein de l'élastomère. La fonction polaire peut être choisie par exemple parmi les fonctions de type amine, silanol, alkoxysilane, alkoxysilane portant un groupement amine, époxyde, éther, ester, hydroxyl, acide carboxylique ... Ces fonctions améliorent notamment l'interaction entre une charge inorganique et l'élastomère.

Il est possible, d'obtenir un mélange de chaînes élastomères portant, outre la fonction alcyne commune à toutes les chaînes, des fonctions différentes en faisant réagir successivement différents agents de fonctionnalisation. Par exemple, il est possible de faire réagir dans un premier temps les chaînes vivantes avec un agent de couplage ou d'étoilage, puis de faire réagir les chaîne vivantes restantes avec un agent de fonctionnalisation introduisant une fonction en extrémité de chaîne.

Il faut comprendre que lorsque les chaînes d'élastomère diénique vivantes réagissent avec un agent de fonctionnalisation, de couplage ou d'étoilage, l'élastomère diénique comprendra autant de fonctions alcynes que de chaînes vivantes ayant été fonctionnalisées, couplées ou étoilées, ces fonctions alcynes se situant en extrémité des chaînes. Ainsi, l'élastomère diénique a) porte un groupement comprenant à une ou chacune de ses extrémités de chaîne une fonction alcyne selon la réaction de fonctionnalisation post polymérisation subie.

Le groupement issu de la fonctionnalisation post-polymérisation peut se situer en bout de chaîne. On dira alors que l'élastomère diénique est fonctionnalisé à l'autre extrémité de chaîne. C'est généralement un élastomère obtenu par réaction d'un élastomère vivant sur un agent de fonctionnalisation, c'est à dire toute molécule au moins monofonctionnelle pour réagir avec un bout de chaîne vivant, la fonction étant tout type de groupement chimique connu par l'homme de l'art, notamment tel qu'évoqué plus haut.

Le groupement issu de la fonctionnalisation post-polymérisation peut se situer dans la chaîne élastomère principale linéaire. On dira alors que l'élastomère diénique est couplé et porte une fonction alcyne à chacune de ses deux extrémités de chaîne. C'est généralement un élastomère obtenu par réaction d'un élastomère vivant sur un agent de couplage, c'est à dire toute molécule au moins difonctionnelle pour réagir avec un bout de chaîne vivant, la fonction étant tout type de groupement chimique connu par l'homme de l'art notamment tel qu'évoqué plus haut.

Le groupement issu de la fonctionnalisation post-polymérisation peut être central auquel n chaînes ou branches élastomères (n>2) sont liées formant une structure en étoile de l'élastomère. On dira alors que l'élastomère diénique est étoilé à n branches et porte une fonction alcyne à chacune de ses n extrémités de chaîne. C'est généralement un élastomère obtenu par réaction d'un élastomère vivant sur un agent d'étoilage, c'est à dire toute molécule multifonctionnelle pour réagir avec un bout de chaîne vivant, la fonction étant tout type de groupement chimique connu par l'homme de l'art notamment tel qu'évoqué plus haut.

Ainsi, l'élastomère diénique portant une fonction alcyne à une ou chacune de ses extrémités de chaîne peut être défini comme répondant à la formule 2 :

(A-E)ₙ-X Formule 2

dans laquelle,
X désigne un groupement hydrocarboné de valence n un groupement issu d'un agent de fonctionnalisation, de couplage et d'étoilage comprenant au moins un atome choisi parmi O, N, Si, Sn ;
A est un radical monovalent comprenant une fonction alcyne, protégée ou non;
E désigne l'élastomère diénique, et
n est un nombre entier allant de 1 à 12, de préférence de 1 à 4.

Selon des variantes de l'invention X comprend un groupement amine, silanol, alkoxysilane, alkoxysilane portant un groupement amine, époxyde, éther, ester, hydroxyl ou encore acide carboxylique.

Selon d'autres variantes de l'invention, X comprend un atome de Sn ou un atome de Si. Selon ces variantes, n est généralement d'au moins 2, et de préférence 2, 3 ou 4.

Selon d'autres variantes encore, A représente un radical alcynyle aliphatique, substitué ou non, ayant 2 à 15 atomes de carbone, de préférence 2 à 5 atomes de carbone. Selon un aspect préférentiel de cette variante, le radical alcynyle est substitué sur l'un des atomes de carbone engagé dans la triple liaison carbone-carbone par un groupement hydrocarboné comprenant un atome de silicium qui est de préférence un groupement trialkylsilyle, le groupe alkyle possédant 1 à 5 atomes de carbone, et plus préférentiellement 1 ou 2 atomes de carbone. Ainsi, A peut être un groupement 5-trialkylsilyl-4-pentynyle, le groupement alkyle étant de préférence méthyle ou éthyle.

Selon d'autres variantes, A représente un radical monovalent répondant à la formule 3 suivante 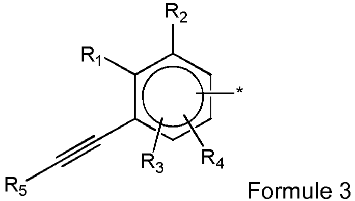 dans laquelle :
* désigne un point de liaison avec la chaîne élastomère E qui peut être porté par la position ortho, méta, ou para par rapport au groupement comprenant la triple liaison carbone-carbone,
R1, R2, ainsi que R3 et R4 qui peuvent être portés par la position ortho, méta ou para, désignent, indépendamment l'un de l'autre, un atome d'hydrogène, un groupe alkyle en C1-C15, cycloalkyle en C5-C15, aryle en C6-C15, arylalkyle en C7-C15, pouvant être séparés du noyau aromatique par un hétéroatome tel que O ou S, et préférentiellement R1, R2, R3 et R4 désignent chacun un atome d'hydrogène, et
R5 désigne un atome d'hydrogène, un groupe alkyle en C1-C5, cycloalkyle, aryle en C6-C15, arylalkyle en C7-C15 ou un groupe protecteur de la fonction alcyne.

Il est entendu que les différentes variantes de l'invention sont combinables entre elles.

Selon une autre variante de l'invention, l'élastomère diénique est constitué d'un coupage ou mélange d'élastomères diéniques répondant à la formule 2 portant chacun à une ou chacune de ses extrémités de chaîne un groupement comprenant une fonction alcyne.

Selon le mode de réalisation de l'invention selon lequel la fonction alcyne est protégée, le procédé de synthèse du copolymère à blocs, peut comprendre une étape de déprotection de la fonction alcyne. Cette étape de déprotection peut avoir lieu avant ou après la réaction de l'élastomère diénique portant à une ou chacune de ses extrémités de chaîne un groupement comprenant une fonction alcyne avec le polymère à fonction azoture. La déprotection s'effectue par des moyens connus en soi. Cette étape est mise en oeuvre après le stoppage de la polymérisation ou, le cas échéant, de la fonctionnalisation post-polymérisation, ou encore après la réaction avec le polymère à fonction azoture. On peut à titre d'exemple faire réagir les chaînes fonctionnalisées par le groupement alcyne protégé avec un acide, une base, un dérivé fluoré tel le fluorure de tétrabutylammonium, un sel d'argent tel que le nitrate d'argent, etc...pour déprotéger la fonction alcyne. Ces différentes méthodes sont décrites dans l'ouvrage « Protective Groups in Organic Synthesis, T. W. Green, P. G. M. Wuts, Third Edition,1999 ». A titre d'illustration, dans le cas d'une polymérisation avec un amorceur de formule 1, R5 représente un atome d'hydrogène à l'issue de cette étape.

La synthèse du copolymère diénique à au moins deux blocs selon l'invention comprend une étape de réaction de type 1,3-dipolaire de a) l'élastomère diénique portant une fonction alcyne à une ou chacune de ses extrémités de chaîne décrit ci-dessus, et b) d'un polymère portant au moins une fonction azoture.

Par polymère portant au moins une fonction azoture, polymère b), on entend selon l'invention, un polymère pouvant s'écrire

P-(N₃)ₘ

P étant un polymère et m un nombre entier allant de 1 à 15, voire de 1 à 12, de préférence 1 à 8.

Ce polymère b) peut être obtenu par tout moyen approprié en fonction du type de monomères mis en oeuvre. On peut citer la polymérisation en chaîne telle que la polymérisation anionique ou cationique, la polymérisation radicalaire, la polymérisation catalytique Ziegler-Natta, ... ou la polymérisation par étapes (polycondensation). La polymérisation peut être effectuée en solution ou en émulsion. Le choix de la polymérisation est à la portée de l'homme de l'art.

Le polymère b) peut également se trouver dans le commerce; à titre d'exemple on peut citer le polystyrène à terminaison azoture commercialisé par la société Sigma-Aldrich.

Selon certaines variantes de l'invention, le polymère b) portant au moins une fonction azoture peut être aussi un polymère obtenu à partir de monomères oléfiniques. On peut citer comme monomère oléfiniques, à titre d'exemples non-exclusifs, les monomères mono-oléfines tels que l'éthylène, le propylène, le 1-butène, l'isobutylène, le pentène, le méthylpentène, le 1-héxène, etc..., les monomères diéniques conjugués tels que décrits plus haut, les monomères diéniques fluorés, les monomères vinyliques tels que les vinyles aromatiques (dérivés du styrène tels que définis plus haut ainsi que les vinyle pyridines, les vinyle N-C1-C6-alkylepyrroles, les vinyle oxazoles, les vinyle thiazoles, les vinyle pyrimidines, les vinyle imidazoles, etc...), les (méth)acrylates d'esters d'alcool en C1-C20 (acide acrylique, acrylamide, acrylate de méthyle, acrylate d'éthyle, acrylate de butyle, acrylate d'hexyle, acrylate de 2-éthylhexyle, acide méthacrylique, méthacrylamide, méthacrylate de méthyle, méthacrylate d'éthyle, méthacrylate de butyle, méthacrylate d'hexyle, méthacrylate de 2-éthylhexyle), les (méth)acrylonitrile, les cyanoacrylates d'esters d'alcool en C1-C6, les vinyle cétones (vinyle méthyle cétone, ...), les vinyle phényle cétone, l'acétate de vinyle, les vinyle acétals, les éthers vinyliques (vinyle méthyle éther, vinyle éthyle éther, vinyle isobutyle éther, etc...), les alcools vinyliques, les vinyle halogénés (chlorure de vinyle, chlorure de vinylidène, tétrafluoroéthylène, fluorure de vinyle, fluorure de vinylidène, éthylène tétrafluoroéthylène, perfluoroalkoxy, etc...), les monomères comprenant du silicium tels que les silanes, les siloxanes (diméthylsiloxane, méthylhydroxysiloxane, diphénylsiloxane, etc...), les carbosilanes, etc..., les oxiranes tels que l'oxyde d'éthylène, l'oxyde de propylène, etc..., les esters cycliques tels que les lactones, les lactides, etc... les monomères comprenant du phosphore (polyphosphazène), les monomères comprenant du soufre (thiazyle, nitrure de soufre, etc...), les monomères comprenant du bore (borazylènes). La polymérisation de tels monomères est connue en soi. L'homme du métier saura adapter la technique de polymérisation en fonction du type de monomère à polymériser.

Selon d'autres variantes, le polymère b) portant au moins une fonction azoture peut être aussi un polymère obtenu par polycondensation tels que les polyesters, polycarbonates, polyanhydrides, polyamines, polyimines, polyamides, polyimides, polyuréthanes, polyurées, polysulfones, polyéthers sulfones, polyarylènealkylène, etc...

Toutefois, la polymérisation radicalaire présente plusieurs avantages dans le cadre de l'invention, notamment en ce qui concerne l'introduction de la fonction azoture dans la chaîne polymère. Différentes techniques de polymérisation radicalaire sont connues de l'homme de l'art à savoir la polymérisation radicalaire conventionnelle (Handbook of Radical Polymerization, Wiley-Interscience, 2002), contrôlée par transfert d'atome (ATRP) (ACS Symp. Ser. 1998, 685, 258-283 ; ACS Symp. Ser. 2000, 768, 2-26 ; Prog. Polym. Sci. 2001, 26, 2083-2134 ; Chem. Rev. 2001, 101, 2921-2990 ; Advances in Polymer Science 2002, 159, 2-166), contrôlée par les nitroxydes (NMP) (Chem. Rev. 2001, 101, 3661-3688) ou contrôlée par addition-fragmentation-transfert (RAFT ou MADIX) (Macromolecules 1998, 31, 5559-5562 ; Handbook of Radical Polymerization, Wiley-Interscience, 2002, pp 629-690). Les techniques de polymérisation radicalaire contrôlée sont utilisées préférentiellement dans le cadre de l'invention, celles-ci permettant la synthèse de polymères dont la masse molaire, la polydispersité, la topologie, la composition et la fonctionnalisation sont bien maîtrisées. La polymérisation radicalaire contrôlée par transfert d'atome (ATRP) est utilisée à titre préférentiel, ce procédé de polymérisation amenant à l'obtention d'un atome d'halogène (Cl ou Br) en bout de chaîne polymère. En effet, la présence de cet atome d'halogène en bout de chaîne offre la possibilité d'introduire la fonction azoture en utilisant des réactions chimiques classiques, telle que la substitution nucléophile.

Un mode de synthèse du polymère b) portant au moins une fonction azoture peut être résumé par la succession des étapes suivantes, qui sont du domaine connu de l'homme de l'art:
- polymérisation du monomère de manière à introduire un atome transférable en bout de chaîne, par exemple un halogène,
- modification du bout de chaîne (halogéne) en groupement azoture par réaction avec un composé azoture, par exemple l'azoture de triméthylsilyle en présence de TBAF.

Dans le cadre d'un amorçage de la polymérisation radicalaire ATRP du monomère par un amorceur halogéné, un amorceur contenant un atome d'halogène tel que le brome est utilisé à titre préférentiel. Comme amorceurs conviennent notamment ceux comportant un ou plusieurs atomes de brome. Des composés représentatifs sont les composés bromés tels que le bromure de 1-phényléthyle ou l'a-bromoisobutyrate de méthyle. Un amorceur halogéné difonctionnel ou de fonctionnalité supérieure peut aussi être employé pour la préparation de polymères possédant en bout de chaîne au moins deux atomes d'halogène, ces derniers pouvant être transformés en groupements azotures après une modification post-polymérisation. On obtient ainsi un polymère b) portant plusieurs fonctions azotures.

L'amorceur bromé est utilisé en combinaison avec un catalyseur constitué d'un métal de transition tel que le cuivre, le fer, le ruthénium, etc... et d'un ligand aminé tel que la 2,2'-bipyridine (BiPy), la *N*,*N*,*N*',*N*",*N*"-pentamethyldiethylenetriamine (PMDETA), l'hexamethyltriethylenetetramine (HMTETA), etc... Le couple CuBr/HMTETA est utilisé de manière préférentielle.

La polymérisation peut être effectuée en masse ou en solution, selon les cas. Lorsque elle est effectuée en solution, est de préférence effectuée de manière connue en soi, en présence d'un solvant inerte vis-à-vis de la polymérisation radicalaire qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène ou dans un solvant plus polaire comme le dichlorométhane, le THF, le DMF, etc...

La polymérisation est effectuée généralement à une température comprise entre 20°C et 120°C et de préférence voisine de 30°C à 90°C.

A titre d'illustration, pour produire un polymère fonctionnel azoture à partir d'un polymère obtenu par ATRP, on peut reprendre la procédure décrite par Matyjaszewski et al. dans l'article Macromol. Rapid Commun. 1997, 18,1057-1064. Cette méthode illustrée ci-dessous en prenant pour exemple le polystyrène peut être transposée à tout monomère polymérisable par ATRP.

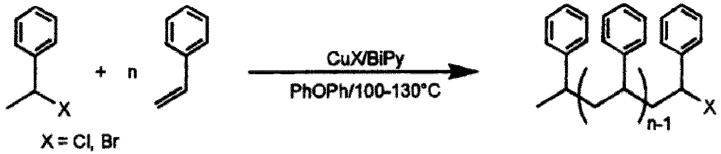

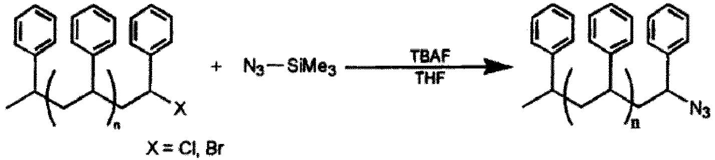

Selon une variante de l'invention, le polymère b) portant au moins une fonction azoture est un poly(méth)acrylate portant au moins une fonction azoture en extrémité de chaîne. Le poly(méth)acrylate peut être obtenu par polymérisation radicalaire telle que décrit ci-dessus en mettant en oeuvre plus particulièrement le α-bromoisobutyrate de méthyle comme amorceur de polymérisation et l'azoture de triméthylsilyle en présence de TBAF comme réactif de post-polymérisation pour la substitution nucléophile.

La fonction azoture peut être introduite dans les chaînes polymériques par diverses voies mentionnées notamment dans l'article Macromol. Rapid Commun. 2008, 29, 952-981. Ces voies sont listées ci-dessous :
- par amorçage : cette voie consistant à utiliser un amorceur fonctionnel azoture a été appliquée en polymérisation radicalaire contrôlée (ATRP, NMP, RAFT) de styrène, acrylates, N-isopropylacrylamide, etc...,tel que déjà évoquée plus haut, en polymérisation anionique par ouverture de cycle d'oxirane (oxyde d'éthylène), par ouverture de cycle de N-carboxyanhydride (synthèse de polypeptide fonctionnel azoture);
- par terminaison : cette voie consistant à effectuer une modification post-polymérisation par réaction de NaN₃ avec un atome d'halogène (réaction de substitution nucléophile) a été appliquée à des polymères préparés par ATRP, par polymérisation anionique ou polymérisation Ziegler-Natta;
- par polymérisation d'un monomère fonctionnel azoture : cette voie consistant à (co)polymériser un monomère porteur d'un groupement pendant azoture a été appliquée à la copolymérisation radicalaire de dérivés (méth)acrylate, styrène, porteurs de fonctions azoture, etc..., à la ROMP (ring opening metathesis polymerization) d'oxynorbornenes porteurs de groupements azotures pendants;

L'invention a principalement pour objet la synthèse de copolymères diéniques à blocs, l'un au moins des blocs étant constitué d'un élastomère diénique, caractérisé en ce qu'il comprend une étape de réaction de deux polymères définis comme étant :
a) un élastomère diénique portant une fonction alcyne à une ou chacune de ces extrémités de chaîne, et
b) un polymère portant au moins une fonction azoture,
ces deux polymères ayant été définis plus-haut.

La réaction de l'élastomère diénique fonctionnel sur le polymère azoture peut être effectuée par réaction de cycloaddition 1,3-dipolaire de Huisgen, c'est-à-dire par la réaction, d'une part, d'une triple liaison carbone-carbone en bout de chaîne de l'élastomère diénique et, d'autre part, d'une fonction azoture en bout de chaîne du polymère, de manière à former un radical 1,2,3-triazol-diyle qui relie ainsi de manière covalente le bloc polymère et le bloc élastomère diénique. On obtient ainsi un copolymère à blocs, comprenant au moins une séquence composé d'un bloc diénique et d'un bloc polymérique reliés entre eux par un radical 1,2,3-triazol-diyle

Les conditions des réactions de couplage des deux blocs polymériques sont à adapter selon les cas et peuvent être effectuées en solution ou non, en présence ou non d'un catalyseur. Ce dernier est généralement à base d'un métal de transition, principalement le cuivre. Cette réaction de cycloaddition est une réaction classique de chimie organique pouvant être effectuée selon les conditions classiques connues de l'homme du métier et mentionnées dans la littérature (Macromol. Rapid Commun., 2008, 29, 952-981 ; Angew. Chem. Int. Ed., 2007, 46, 1018 ; Macromol. Rapid Commun., 2005, 26, 514 ; Macromol. Rapid Commun., 2005, 26, 514 ; Aust. J. Chem., 2007, 68, 410 ; Macromol. Rapid Commun., 2008, 29, 1161 ; J. Polym. Sci., 2008, 46, 3459 ; Macromolecules, 2006, 39, 6376 ; Macromolecules, 2007, 40, 796 ; Chem. Commun., 2005, 5334 ; Polymer, 2008, 274 ; EP 2007/054702 ; Macromolecules, 2007, 40, 5653 ; Macromol. Rapid Commun., 2008, 29, 1147 ; Angew. Chem. Int. Ed. 2008, 47, 9311 -9313).

Le copolymère diénique à blocs ainsi obtenu constitue également un objet de l'invention. Ce copolymère diénique à blocs peut être défini comme comprenant au moins une séquence répondant à la formule suivante :

P-L-E

dans laquelle
P représente un polymère tel que défini plus haut
E représente un élastomère diénique tel que défini plus haut
L est un groupement hydrocarboné comprenant un radical 1,2,3-triazol-diyle de formules respectives (D) et (F), ou un mélange de ces deux formules: 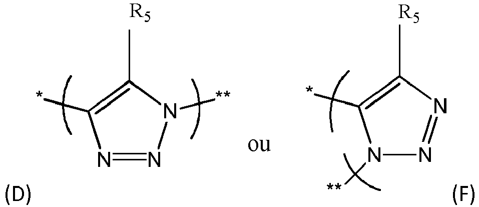
   * indiquant un point de liaison vers une chaîne polymère
   ** indiquant un point de liaison vers un bloc P du copolymère
   R5 désigne un atome d'hydrogène, un groupe alkyle en C1-C5, cycloalkyle, aryle en C6-C15, arylalkyle en C7-C15, ou un groupe protecteur de fonctions alcynes.

Plus particulièrement, lorsque l'élastomère est synthétisé par amorçage au moyen d'un composé de formule 1, défini plus haut, L est un groupement hydrocarboné représenté par l'une des formules D1 et F1 suivante 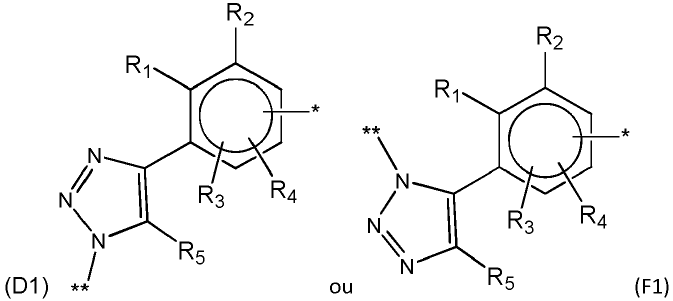
R1 à R5 et * étant tel que défini plus haut
** désigne un point de liaison avec la chaîne polymère P.

Le copolymère ainsi obtenu peut subir d'autres réactions visant à en modifier sa structure. A titre d'exemple on peut citer l'hydrogénation. Il faut comprendre que selon le nombre de fonctions alcynes portées par l'élastomère diénique a) et le nombre de fonctions azotures portée par le polymère b), le copolymère peut être linéaire, étoilé ou former un réseau tridimensionnel comprenant au moins une séquence P - L - E.

A titre d'illustration :
- lorsque l'élastomère a) est (A - E)n- X avec n=1 et que le polymère b) comprend une fonction azoture, alors le copolymère à blocs est linéaire et répond à la formule :

   P-L-E-X
- lorsque l'élastomère a) est (A - E)ₙ- X avec n=2 et que le polymère b) comprend une fonction azoture, alors le copolymère à blocs est linéaire et répond à la formule :

   P-L-E-X-E-L-P
- lorsque l'élastomère a) est (A - E)ₙ- X avec n=1 et que le polymère b) comprend deux fonctions azotures, alors le copolymère à blocs est linéaire et répond à la formule :

   X-E-L-P-L-E-X
- lorsque l'élastomère a) est (A - E)ₙ- X avec n=2 et que le polymère b) comprend deux fonctions azoture, alors le copolymère à blocs est linéaire et répond à la formule :

   ....- X - E - L - P - L - E - X - E - L - P- L - E - X -....

   La longueur de la chaîne étant déterminée par la proportion des différents blocs polymères. Une fois ceux-ci consommés ou alors si le bloc en défaut est consommé, la réaction de cycloaddition est alors stoppée.
- lorsque l'élastomère a) est (A - E)ₙ- X avec n=1 et que le polymère b) comprend m fonctions azotures, m étant un entier supérieur ou égal à 3, alors le copolymère à blocs est étoilé et répond à la formule :

   (X-E-L)ₘ-P
- lorsque l'élastomère a) est (A - E)ₙ- X avec n est supérieur ou égal à 3 et que le polymère b) comprend une fonction azoture, alors le copolymère à blocs est en étoile et répond à la formule :

   (P-L-E)ₙ-X
- lorsque l'élastomère a) est (A - E)ₙ- X avec n est supérieur ou égal à 3 et que le polymère b) comprend au moins deux fonctions azotures, alors le copolymère à blocs est un réseau tridimensionnel comprenant la séquence P - L - E, chaque E étant lié à un groupement X et un groupement L, chaque X étant lié à n (au moins trois) élastomères E et chaque polymère P étant lié à au moins deux groupements L.

A, X, E, P, L, m et n étant tels que définis plus haut.

Les copolymères diéniques à blocs peuvent avantageusement être utilisés dans des compositions de caoutchouc renforcées conformes à l'invention dans lesquelles ils peuvent, en fonction de la nature des blocs, en améliorer certaines propriétés. Le choix de la nature des blocs peut être fait judicieusement en fonction du type de compromis de propriétés que l'on souhaite atteindre. Ainsi, une application en pneumatique pour véhicule automobile peut être visée et le choix du type de blocs peut être fait en conséquence.

Les compositions de caoutchouc renforcées conformes à l'invention peuvent être utilisées en vue d'une application aux pneumatiques. Les compositions de caoutchouc conformes à l'invention comprennent au moins une charge renforçante et un copolymère diénique à au moins deux blocs consécutifs liés par un groupe comprenant un groupement 1,2,3-triazol-diyle. Ce copolymère à blocs peut éventuellement être utilisé en coupage avec au moins un ou plusieurs élastomères conventionnellement utilisés dans les compositions de caoutchouc pour pneumatiques et choisis parmi le caoutchouc naturel, les élastomères diéniques synthétiques, éventuellement couplés et/ou étoilés et/ou encore partiellement ou entièrement fonctionnalisés, les élastomères synthétiques autres que diéniques, voire des polymères autres que des élastomères.

La charge renforçante présente dans la composition de caoutchouc est choisie parmi les charges inorganiques, telles que la silice, les charges organiques, telles que du noir de carbone, ou les mélanges de ces charges.

Ces compositions peuvent en outre comprendre divers additifs usuellement présents dans les compositions de caoutchouc notamment destinées aux pneumatiques pour véhicules automobiles. On citera par exemple des agents de liaison gomme/charge, des charges non renforçantes, divers agents de mise en oeuvre ou autres stabilisants, des plastifiants, des pigments, des anti-oxydants, des agents anti-fatigue, des cires anti-ozonantes, des promoteurs d'adhésion, des résines renforçantes ou plastifiantes, un système de réticulation à base soit de soufre et/ou de peroxyde et/ou de bismaléimides, des activateurs de réticulation comprenant du monoxyde de zinc et de l'acide stéarique, des dérivés guanidiques, des huiles d'extension, un ou plusieurs agents de recouvrement de la silice.

Les caractéristiques précitées de la présente invention, ainsi que d'autres, seront mieux comprises à la lecture de la description suivante de plusieurs exemples de réalisation de l'invention, donnés à titre illustratif et non limitatif en relation avec les annexes jointes.

### EXEMPLE DE REALISATION DE L'INVENTION.

### Mesures et tests utilisés

Techniques expérimentales utilisées pour la caractérisation avant cuisson des polymères obtenus :
(a) Détermination de la distribution de masses molaires par la technique de chromatographie d'exclusion stérique Triple Détection (SEC3D).
   1) Principe de la mesure:
      La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.
      Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et l'indice de polymolécularité (Ip = Mw/Mn) peuvent également être calculées.
   2) Préparation du polymère:
      Il n'y a pas de traitement particulier de l'échantillon de polymère avant analyse. Celui-ci est simplement solubilisé dans du (tétrahydrofuranne + 1%vol. de diisopropylamine + 1%vol. de triéthylamine) à une concentration d'environ 1 g/L. Puis la solution est filtrée sur filtre de porosité 0.45µm avant injection.
   3) Analyse SEC3D:
      L'appareillage utilisé est un chromatographe « WATERS Alliance ». Le solvant d'élution est du (tétrahydrofuranne + 1%vol. de diisopropylamine + 1%vol. de triéthylamine), le débit de 0,5 mL/min, la température du système de 35°C. On utilise un jeu de quatre colonnes POLYMER LABORATORIES en série, de dénominations commerciales : deux « MIXED A LS » et deux « MIXED B LS ».
      Le volume injecté de la solution de l'échantillon de polymère est 100 µL. Le système de détection utilisé est le « TDA 302 de VISCOTEK », il est composé d'un réfractomètre différentiel, d'un viscosimètre différentiel et d'un détecteur de diffusion de la lumière à 90°. Pour ces 3 détecteurs, la longueur d'onde est de 670nm. Pour le calcul des masses molaires moyennes est intégrée la valeur de l'incrément d'indice de réfraction dn/dC de la solution de polymère, valeur préalablement définie dans du (tétrahydrofuranne + 1%vol. de diisopropylamine + 1%vol. de triéthylamine) à 35°C et 670nm. Le logiciel d'exploitation des données est le système « OMNISEC de VISCOTEK».
(b) Les températures de transition vitreuse Tg des polymères sont mesurées au moyen d'un calorimètre différentiel (" differential scanning calorimeter "). L'analyse est réalisée selon les requis de la norme ASTM D3418-08.
(c) Les analyses RMN sont réalisées sur un spectromètre BRUKER AVANCE 500MHz équipé d'une sonde " large bande " BBIz-grad 5 mm. L'expérience RMN 1H quantitative, utilise une séquence simple impulsion 30° et un délai de répétition de 3 secondes. Les échantillons sont solubilisés dans le sulfure de carbone (CS2). 100 µL de cyclohexane deutéré (C6D12) sont ajoutés pour le signal de lock.
   Le spectre RMN 1H permet de quantifier les motifs (CH3)3Si par intégration du signal caractéristique des protons SiCH3 entre 0.20ppm et 0.10ppm.
   Le spectre RMN 2D HMQC 1H-29Si permet de vérifier la nature de la fonction grâce aux valeurs de déplacements chimiques des noyaux Silicium et des protons au voisinage 2J (via 2 liaisons).
(d) La spectroscopie proche infrarouge (NIR) est utilisée pour déterminer quantitativement la microstructure de l'élastomère (répartition relative des unités butadiene 1,2-vinyl, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN 13C. La microstructure est alors calculée à partir du spectre NIR d'un film d'élastomère d'environ 730 µm d'épaisseur. L'acquisition du spectre est réalisée en mode transmission entre 4000 et 6200 cm-1 avec une résolution de 2 cm-1, à l'aide d'un spectromètre proche infrarouge à transformée de Fourier Bruker Tensor 37 équipé d'un détecteur InGaAs refroidi par effet Peltier.

La spectroscopie moyen infrarouge permet de démontrer qualitativement la consommation des fonctions alcyne et azoture au cours de la réaction « click ». L'acquisition du spectre est réalisée en mode transmission entre 4000 et 400 cm-1 avec une résolution de 2 cm-1, à l'aide d'un spectromètre à transformée de Fourier Vertex 70-2 équipé d'un détecteur DTGS.

### Exemple 1 : Synthèse de polybutadiène fonctionnel acétylène protégé selon l'invention:

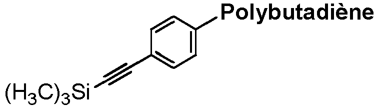

### A / Synthèse de l'amorceur :

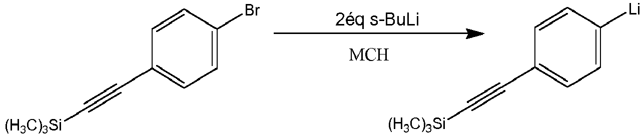

L'amorceur fonctionnel acétylène protégé est préparé par dissolution de 1,9g (7,5.10⁻³ mol) de 1-bromo-4-trimethylsilylethynylphenyle dans 65mL de méthylcyclohexane à température ambiante sous azote, puis par ajout de 0,11mL de tétraméthyléthylènediamine et de 11,7mL (15.10⁻³ mol) d'une solution de s-BuLi à 1,28 mol/L. La réaction d'échange halogène/lithium est laissée sous agitation pendant 45 minutes à température ambiante, puis la solution d'amorceur est dosée par dosage de type Gilman. La concentration en espèce active est de 0,114 mol/L.

### B/ Synthèse du polybutadiène fonctionnel acétylène protégé :

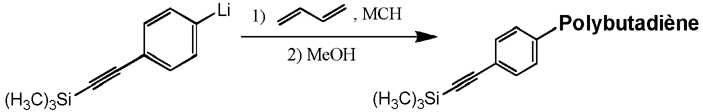

La polymérisation anionique est effectuée dans une bouteille capsulée sous agitation modérée et sous atmosphère inerte d'azote. Avant de débuter la polymérisation, 94mL de méthylcyclohexane sont introduits dans la bouteille. La bouteille est capsulée et un barbotage à l'azote est effectué pendant 10 minutes. 15mL de butadiène sont ensuite injectés dans la bouteille. Une préneutralisation des impuretés est faite par ajout dosé de n-BuLi directement sur le mélange de monomère, solvant et éventuellement agent polaire.
La solution d'amorceur est ajoutée sur ce mélange préneutralisé de solvant et de butadiène. La température du milieu réactionnel est de 40°C. En fin de polymérisation, une solution de méthanol en solution dans du méthylcyclohexane est ajoutée sur le polymère vivant afin de protoner les chaînes vivantes.
La solution de polymère est soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine, puis le polymère est séché par étuvage à 60°C pendant 1 jour. Il peut également être utilisé directement en solution pour l'étape de déprotection de la fonction acétylène.
Le taux de conversion est de 80%. Le rendement de fonctionnalisation, quantifié par RMN ¹H, est de 90%. Le polybutadiène présente un taux molaire de 31% d'unité vinylique. Les caractérisations SEC indiquent une Mn = 54 000 g/mol et un Ip = 1,11. L'analyse IR démontre la présence d'une bande vers 2159 cm⁻¹ correspondant à la bande de vibration de l'acétylène protégé. La Tg du polymère est de -79 °C.

### Exemple 2 : Synthèse de polybutadiène fonctionnel acétylène à partir du polybutadiène fonctionnel acétylène protégé :

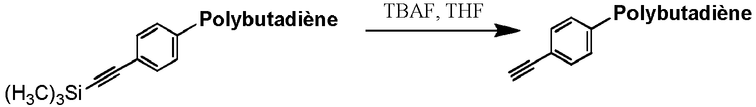

2 g de polybutadiène (Mn = 54 000 g/mol et Ip = 1,11) sont dissous dans 12 mL de THF. 0,37 mL (0,37 mmol) d'une solution de TBAF à 1M dans le THF sont ajoutés à la solution de polymère. Le milieu réactionnel est laissé sous agitation pendant 24h à température ambiante, puis le polymère est précipité dans le méthanol. Le polymère est remis en solution dans du toluène puis soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine. Le polymère est séché par étuvage à 60°C pendant 1 jour et 1,8 g de polymère sont récupérés.
Le rendement de déprotection estimé par RMN ¹H est de 100%. L'analyse IR démontre la disparition de la bande à 2159 cm⁻¹ et la présence d'une nouvelle bande vers 2110 cm⁻¹ correspondant à la bande de vibration de l'acétylène déprotégé.

On obtient ainsi le polybutadiène portant une fonction alcyne en extrémité de chaîne conformément à l'invention.
Ce polybutadiène est parfaitement adapté à la synthèse d'un copolymère à blocs par réaction avec un polymère portant une fonction azoture en extrémité de chaîne.

### Exemple 3 : Synthèse de poly(méthacrylate de méthyle) halogéné

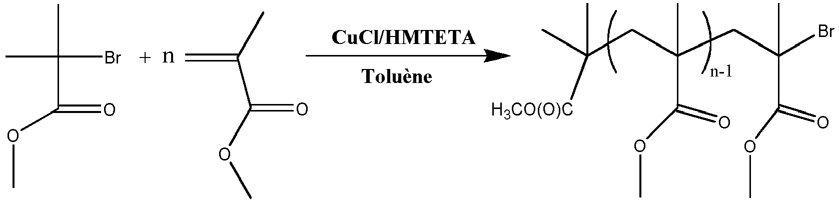

Dans un tube de Schlenk muni d'un barreau aimanté, 24,75 mg (250 µmol) de CuCI, 136 µL d'HMTETA (500 µmol) et 15,23 mL (0,142mol) de MMA sont introduits sous flux d'azote. Le mélange est dissout dans 15,3 mL de toluène. Après dissolution, 48,76 mg (0,269 mmol) d'a-bromoisobutyrate de méthyle sont additionnés, puis 3 cycles de dégazage (vide/azote) sont effectués. Le ballon réactionnel sous azote est placé dans un bain d'huile à 60°C pour une durée de 20 heures.
En fin de réaction, le mélange réactionnel est passé sur colonne d'alumine avec le toluène ou le THF comme éluant afin d'éliminer les résidus catalytiques de cuivre. La solution obtenue est concentrée à l'évaporateur rotatif et le polymère est précipité dans le méthanol. Le polymère est séché une nuit à l'étuve sous vide à 60 °C et 13,5 g de polymère sont récupérés.

Le polymère caractérisé par SEC possède une Mn = 55 400 g/mol et un Ip = 1,08. La Tg du polymère est de 113 °C.

### Exemple 4 : Synthèse de poly(méthacrylate de méthyle) fonctionnel azoture

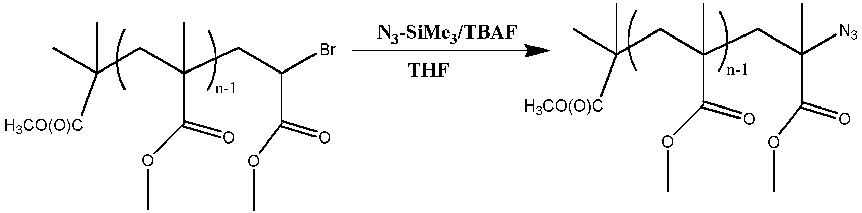

Dans un ballon bicol muni d'un barreau aimanté, 3g (5,4.10⁻⁵ mol, 1 eq) de PMMA fonctionnel brome sont dissous dans 15 mL de THF anhydre. 0,54 mL d'une solution de triméthylsilylazoture à 1M dans le THF (10 eq) et 0,54 mL de TBAF (10 eq) sont ajoutés au polymère. La réaction de fonctionnalisation est laissée sous agitation pendant 5 jours à 40°C. Le milieu réactionnel est concentré à l'évaporateur rotatif et le polymère est précipité dans le méthanol. Le polymère est séché une nuit à l'étuve sous vide à 60 °C et 2,8g de polymère sont récupérés.
L'analyse IR démontre la présence d'une bande vers 2115 cm⁻¹ correspondant à la bande de vibration de l'azoture.

### Exemple 5 : Synthèse du copolymère à blocs polybutadiène - poly(méthacrylate de méthyle) :

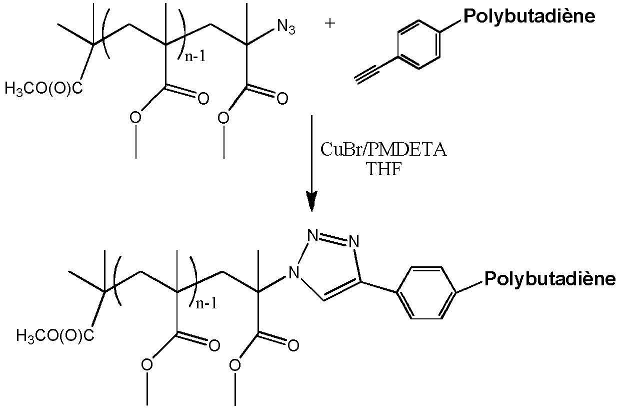

Dans un ballon bicol muni d'un barreau aimanté, 920 mg de PMMA (Mn = 55 400 g/mol et Ip = 1,08) fonctionnel azoture (1,66.10⁻⁵ mole, 0,9 eq) et 1 g de PB (Mn = 54 000 g/mol et Ip = 1,1) fonctionnel acétylène (1,85.10⁻⁵ mol, 1 eq) sont introduits et dissous dans 15 mL de THF anhydre. Après dissolution des polymères, 20 µL (2 eq) de PMDETA (pentaméthyldiéthylènetriamine) sont injectés sous flux d'azote. Plusieurs cycles de dégazage (vide/azote) sont effectués.
Dans un Schlenk préalablement séché et muni d'un barreau aimanté, 6,875 mg de CuBr sont introduits et la solution de polymères et PMDETA est additionnée sur le CuBr sous flux d'azote. Le milieu réactionnel est chauffé dans un bain d'huile à 55°C et laissé sous agitation pendant 48 heures.

Le milieu réactionnel est passé sur colonne d'alumine pour retirer les résidus de cuivre, puis concentré à l'évaporateur rotatif. Le copolymère est précipité dans le méthanol. Le copolymère remis en solution dans du toluène puis soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine est séché par étuvage à 60°C pendant 1 jour. 1,5 g de copolymère sont récupérés après séchage.
Le copolymère à blocs analysé par IR a démontré la disparition des deux bandes correspondant à l'acétylène et à l'azoture. L'analyse RMN a indiqué la disparition du signal du proton de l'acétylène à 2,9 ppm. La caractérisation SEC a démontré une pureté du copolymère d'au moins 90% (Mn = 105400 g/mol et un Ip = 1,2). Le copolymère possède deux Tg de l'ordre -79 °C et 113 °C.

### Exemple 6 : Synthèse du copolymère à blocs polybutadiène - polystyrène :

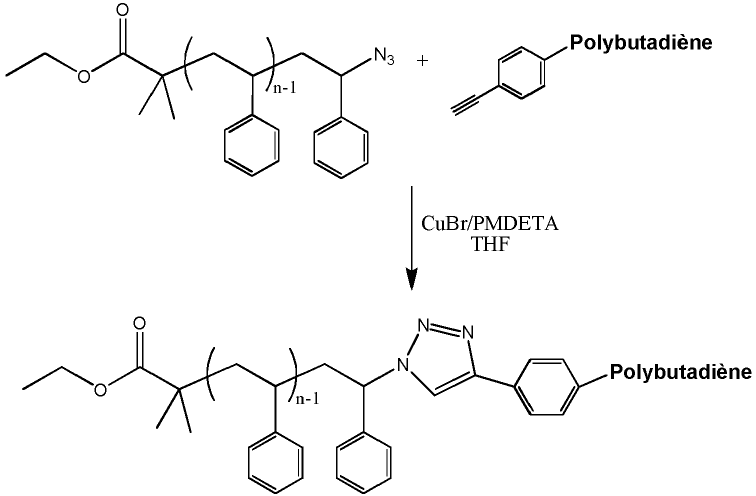

Dans un ballon bicol muni d'un barreau aimanté, 920 mg de polystyrène (Mn = 2 500 g/mol et Ip = 1,3) fonctionnel azoture (1,96.10⁻⁵ mole, 0,94 eq), commercialisé par la société Sigma-Aldrich, et 1 g de PB (Mn = 48 000 g/mol et Ip = 1,1) fonctionnel acétylène à 94% d'après l'analyse RMN¹H (2,08.10⁻⁵ mol, 1 eq) sont introduits et dissous dans 15 mL de THF anhydre. Après dissolution des polymères, 23 µL de PMDETA sont injectés sous flux d'azote. Plusieurs cycles de dégazage (vide/azote) sont effectués.
Dans un Schlenk préalablement séché et muni d'un barreau aimanté, 7,73 mg de CuBr sont introduits et la solution de polymères et PMDETA est additionnée sur le CuBr sous flux d'azote. Le milieu réactionnel est chauffé dans un bain d'huile à 55°C et laissé sous agitation pendant 48 heures.
Le milieu réactionnel est passé sur colonne d'alumine pour retirer les résidus de cuivre, puis concentré à l'évaporateur rotatif. Le copolymère est précipité dans le méthanol. Le copolymère remis en solution dans du toluène puis soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine est séché par étuvage à 60°C pendant 1 jour. 1,5 g de copolymère sont récupérés après séchage.
Le copolymère à blocs analysé par IR a démontré la disparition des deux bandes bande à 2092cm⁻¹ caractéristique du polystyrène de départ et de bande à 2110cm⁻¹ caractéristique de l'acétylène déprotégé. L'analyse RMN a indiqué la disparition du signal du proton de l'acétylène à 2,9 ppm. La caractérisation SEC a démontré une pureté du copolymère d'au moins 90% (Mn = 51500 g/mol et un Ip = 1,2). Le copolymère possède deux Tg de l'ordre - 80 °C et 75 °C.

## Revendications

1. Composition de caoutchouc à base
(1) d'une matrice élastomère comprenant au moins un copolymère à blocs, au moins l'un des blocs étant constitué d'un élastomère diénique, comprenant au moins une séquence répondant à la formule suivante :
P-L-E
dans laquelle
P désigne un polymère,
E désigne un élastomère diénique,
L désigne un groupement hydrocarboné divalent comprenant au moins un groupement triazoldiyle répondant à l'une des formules (D) et (F): 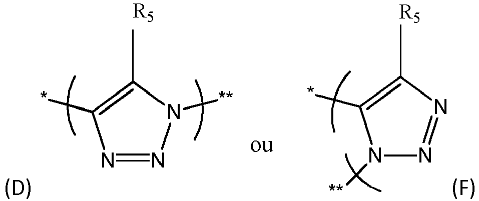
* indiquant un point de liaison vers un bloc E du copolymère
** indiquant un point de liaison vers un bloc P du copolymère
R5 désigne un atome d'hydrogène, un groupe alkyle en C1-C5, cycloalkyle, aryle en C6-C15, arylalkyle en C7-C15 ou un groupement protecteur de fonctions alcynes ;
et
(2) d'une charge renforçante.

2. Composition selon la revendication 1, **caractérisée en ce que** le copolymère diénique à blocs répond à la formule :
(P - L - E)ₙ - X
dans laquelle,
P désigne un polymère,
E désigne un élastomère diénique,
L désigne un groupement hydrocarboné divalent comprenant un groupement triazoldiyle répondant à l'une des formules (D) et (F): 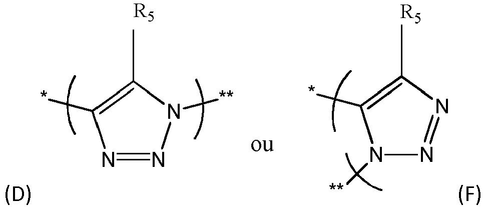
* indiquant un point de liaison vers un bloc E du copolymère
** indiquant un point de liaison vers un bloc P du copolymère
R5 désigne un atome d'hydrogène, un groupe alkyle en C1-C5, cycloalkyle, aryle en C6-C15, arylalkyle en C7-C15 ou un groupement protecteur de fonctions alcynes.
X désigne un radical mono ou polyvalent choisi parmi un radical alkyl en C1- C15, cycloalkyle en C5-C15, aryle en C6-C15, arylalkyle en C7-C15, un radical issu d'un agent de fonctionnalisation, de couplage ou d'étoilage comprenant au moins un atome choisi parmi O, N, Si, Sn,
n est un nombre entier allant 1 à 12.

3. Composition selon la revendication 1, **caractérisée en ce que** le copolymère diénique à blocs répond à la formule :
(X-E-L)ₘ-P
dans laquelle,
P désigne un polymère,
E désigne un élastomère diénique,
L désigne un groupement hydrocarboné divalent comprenant un groupement triazoldiyle répondant à l'une des formules (D) et (F): 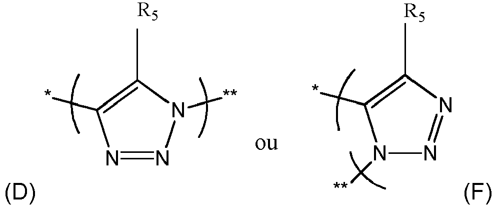
* indiquant un point de liaison vers un bloc E du copolymère
** indiquant un point de liaison vers un bloc P du copolymère
R5 désigne un atome d'hydrogène, un groupe alkyle en C1-C5, cycloalkyle, aryle en C6-C15, arylalkyle en C7-C15 ou un groupement protecteur de fonctions alcynes.
X désigne un radical mono choisi parmi un radical alkyl en C1- C15, cycloalkyle en C5-C15, aryle en C6-C15, arylalkyle en C7-C15, un radical issu d'un agent de fonctionnalisation comprenant au moins un atome choisi parmi O, N, Si, Sn,
m est un nombre entier allant 1 à 12.

4. Composition selon l'une quelconque des revendications 1 à 3, **caractérisée en ce que** L désigne un groupement hydrocarboné divalent répondant à l'une des formules D1 et F1 suivantes 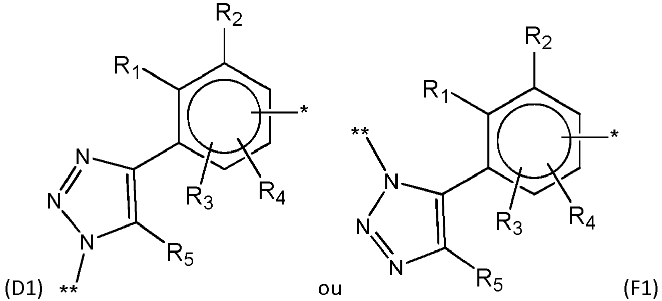 dans laquelle :
R1, R2, ainsi que R3 et R4 qui peuvent être portés par la position ortho, méta ou para, désignent, indépendamment l'un de l'autre, un atome d'hydrogène, un groupe alkyle en C1-C15, cycloalkyle en C5-C15, aryle en C6-C15, arylalkyle en C7-C15, pouvant être séparés du noyau aromatique par un hétéroatome tel que O ou S, et préférentiellement R1, R2, R3 et R4 désignent chacun un atome d'hydrogène,
R5 désigne un atome d'hydrogène, un groupe alkyle en C1-C5, cycloalkyle, aryle en C6-C15, arylalkyle en C7-C15 ou un groupement protecteur de fonctions alcynes, et,
* indique un point de liaison vers un bloc E du copolymère qui se situe en position ortho, méta, ou para par rapport au groupement triazoldiyle
** indique un point de liaison vers un bloc P du copolymère

5. Composition selon l'une quelconque des revendications 1 à 4, **caractérisée en ce que** E est choisi parmi les polybutadiènes (BR), les polyisoprènes (IR) de synthèse, les copolymères de butadiène-styrène (SBR), les copolymères d'isoprène-butadiène (BIR), les copolymères d'isoprène-styrène (SIR) et les copolymères d'isoprène-butadiène-styrène (SBIR).

6. Composition selon l'une quelconque des revendications 1 à 5 **caractérisée en ce que** P est un élastomère diénique, un polyacrylate, un polystyrène.

7. Pneumatique pour véhicule dont l'un des éléments constitutifs comprend une composition de caoutchouc telle que définie dans l'une quelconque des revendications 1 à 6.

## Patentansprüche

1. Kautschukzusammensetzung auf Basis
(1) einer Elastomermatrix, die mindestens ein Blockcopolymer umfasst, wobei mindestens einer der Blöcke aus einem Dienelastomer besteht, das mindestens eine Sequenz der folgenden Formel umfasst:
P - L - E,
in der
P für ein Polymer steht,
E für ein Dienelastomer steht,
L für eine Kohlenwasserstoffgruppe mit mindestens einer Triazoldiylgruppe, die einer der Formeln (D) und (F) entspricht: 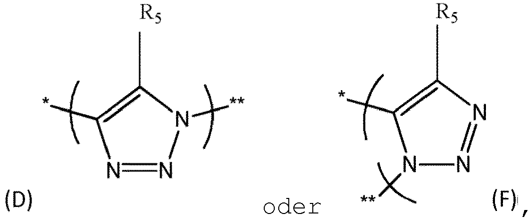
wobei * einen Verknüpfungspunkt mit einem E-Block des Copolymers anzeigt,
wobei ** einen Verknüpfungspunkt mit einem P-Block des Copolymers anzeigt,
R5 für ein Wasserstoffatom, eine C1-C5-Alkylgruppe, eine Cycloalkylgruppe, eine C6-C15-Arylgruppe, eine C7-C15-Arylalkyl-gruppe oder eine Schutzgruppe für Alkinfunktionen steht;
und
(2) eines verstärkenden Füllstoffs.

2. Zusammensetzung nach Anspruch 1, **dadurch gekennzeichnet, dass** das Dienblockcopolymer der folgenden Formel entspricht:
(P-L-E)ₙ-X,
in der
P für ein Polymer steht,
E für ein Dienelastomer steht,
L für eine Kohlenwasserstoffgruppe mit mindestens einer Triazoldiylgruppe, die einer der Formeln (D) und (F) entspricht: 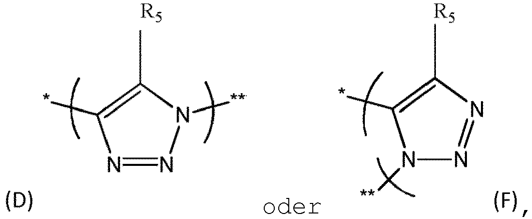
wobei * einen Verknüpfungspunkt mit einem E-Block des Copolymers anzeigt,
wobei ** einen Verknüpfungspunkt mit einem P-Block des Copolymers anzeigt,
R5 für ein Wasserstoffatom, eine C1-C5-Alkylgruppe, eine Cycloalkylgruppe, eine C6-C15-Arylgruppe, eine C7-C15-Arylalkylgruppe oder eine Schutzgruppe für Alkinfunktionen steht,
X für einen ein- oder mehrwertigen Rest steht, der aus einem C1-C15-Alkylrest, einem C5-C15-Cycloalkylrest, einem C6-C15-Arylrest, einem C7-C15-Arylalkylrest oder einem aus einem Funktionalisierungs-, Kupplungs- oder Sternverzweigungsmittel stammenden Rest mit mindestens einem Atom, das aus O, N, Si und Sn ausgewählt ist, ausgewählt ist,
n für eine ganze Zahl im Bereich von 1 bis 12 steht.

3. Zusammensetzung nach Anspruch 1, **dadurch gekennzeichnet, dass** das Dienblockcopolymer der folgenden Formel entspricht:
(X-E-L)ₘ-P,
in der
P für ein Polymer steht,
E für ein Dienelastomer steht,
L für eine Kohlenwasserstoffgruppe mit mindestens einer Triazoldiylgruppe, die einer der Formeln (D) und (F) entspricht: 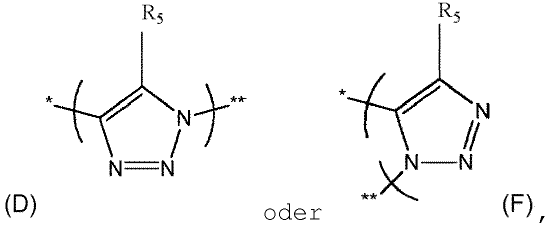
wobei * einen Verknüpfungspunkt mit einem E-Block des Copolymers anzeigt,
wobei ** einen Verknüpfungspunkt mit einem P-Block des Copolymers anzeigt,
R5 für ein Wasserstoffatom, eine C1-C5-Alkylgruppe, eine Cycloalkylgruppe, eine C6-C15-Arylgruppe, eine C7-C15-Arylalkylgruppe oder eine Schutzgruppe für Alkinfunktionen steht,
X für einen einwertigen Rest steht, der aus einem C1-C15-Alkylrest, einem C5-C15-Cycloalkylrest, einem C6-C15-Arylrest, einem C7-C15-Arylalkylrest oder einem aus einem Funktionalisierungsmittel stammenden Rest mit mindestens einem Atom, das aus O, N, Si und Sn ausgewählt ist, ausgewählt ist,
m für eine ganze Zahl im Bereich von 1 bis 12 steht.

4. Zusammensetzung nach einem der Ansprüche 1 bis 3, **dadurch gekennzeichnet, dass** L für eine zweiwertige Kohlenwasserstoffgruppe steht, die einer der folgenden Formeln D1 und F1 entspricht: 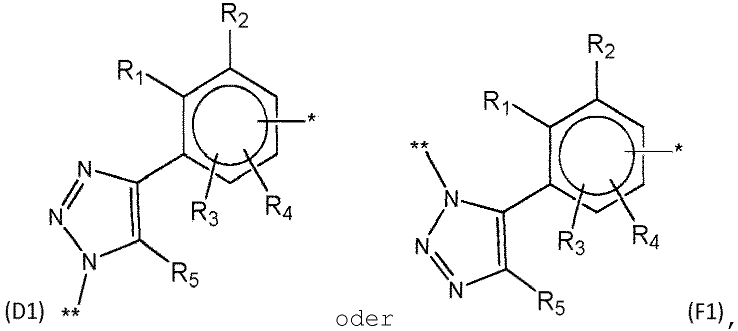 in der:
R1, R2 sowie R3 und R4, die in der ortho-, meta- oder para-Position stehen können, oder wenn ich voneinander für ein Wasserstoffatom, eine C1-C15-Alkylgruppe, eine C5-C15-Cycloalkylgruppe, eine C6-C15-Arylgruppe oder eine C7-C15-Arylalkylgruppe, die durch ein Heteroatom wie O oder S von dem aromatischen Kern getrennt sein können und vorzugsweise R1, R2, R3 und R4 jeweils für ein Wasserstoffatom stehen,
R5 für ein Wasserstoffatom, eine C1-C5-Alkylgruppe, eine Cycloalkylgruppe, eine C6-C15-Arylgruppe, eine C7-C15-Arylalkylgruppe oder eine Schutzgruppe für Alkinfunktionen steht und
* einen Verknüpfungspunkt mit einem E-Block des Copolymers anzeigt, der sich in ortho-, meta- oder para-Position zur Triazoldiylgruppe befindet,
** einen Verknüpfungspunkt mit einem P-Block des Copolymers anzeigt.

5. Zusammensetzung nach einem der Ansprüche 1 bis 4, **dadurch gekennzeichnet, dass** E aus Polybutadienen (BR), synthetischen Polyisoprenen (IR), Butadien-Styrol-Copolymeren (SBR), Isopren-Butadien-Copolymeren (BIR), Isopren-Styrol-Copolymeren (SIR) und Isopren-Butadien-Styrol-Copolymeren (SBIR) ausgewählt ist.

6. Zusammensetzung nach einem der Ansprüche 1 bis 5, **dadurch gekennzeichnet, dass** es sich bei P um ein Dienelastomer, ein Polyacrylat oder ein Polystyrol handelt.

7. Fahrzeugreifen, wobei eines seiner Aufbauelemente eine Kautschukzusammensetzung gemäß einem der Ansprüche 1 bis 6 umfasst.

## Claims

1. Rubber composition based on
(1) an elastomer matrix comprising at least one block diene copolymer at least one of the blocks being composed of a diene elastomer comprising at least one sequence corresponding to the following formula:
P-L-E
in which:
P denotes a polymer,
E denotes a diene elastomer,
L denotes a divalent hydrocarbon group comprising at least one triazolediyl group corresponding to one of the formulae (D) and (F): 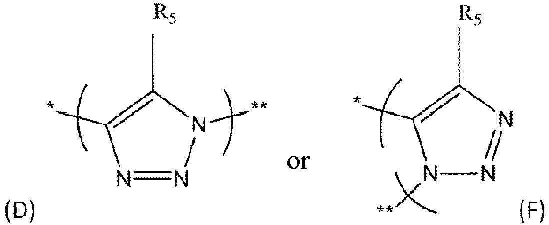
* indicating a point of bonding to an E block of the copolymer,
** indicating a point of bonding to a P block of the copolymer,
R₅ denoting a hydrogen atom, a C₁-C₅ alkyl group, a cycloalkyl group, a C₆-C₁₅ aryl group, a C₇-C₁₅ arylalkyl group or a protective group for alkyne functional groups;
(2) a reinforcing filler.

2. Composition according to Claim 1, **characterized in that** the block diene copolymer corresponds to the formula:
(P-L-E)ₙ-X
in which:
P denotes a polymer,
E denotes a diene elastomer,
L denotes a divalent hydrocarbon group comprising a triazolediyl group corresponding to one of the formulae (D) and (F): 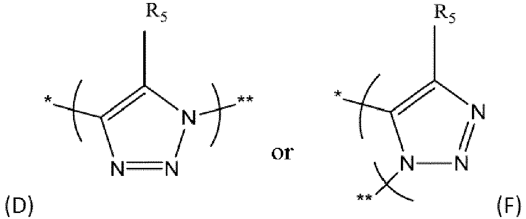
* indicating a point of bonding to an E block of the copolymer,
** indicating a point of bonding to a P block of the copolymer,
R₅ denoting a hydrogen atom, a C₁-C₅ alkyl group, a cycloalkyl group, a C₆-C₁₅ aryl group, a C₇-C₁₅ arylalkyl group or a protective group for alkyne functional groups,
X denotes a mono- or polyvalent radical chosen from a C₁-C₁₅ alkyl radical, a C₅-C₁₅ cycloalkyl radical, a C₆-C₁₅ aryl radical, a C₇-C₁₅ arylalkyl radical or a radical resulting from a functionalization, coupling or star-branching agent comprising at least one atom chosen from O, N, Si or Sn,
n is an integer ranging from 1 to 12.

3. Composition according to Claim 1, **characterized in that** the block diene copolymer corresponds to the formula:
(X - E - L)ₘ - P
in which:
P denotes a polymer,
E denotes a diene elastomer,
L denotes a divalent hydrocarbon group comprising a triazolediyl group corresponding to one of the formulae (D) and (F): 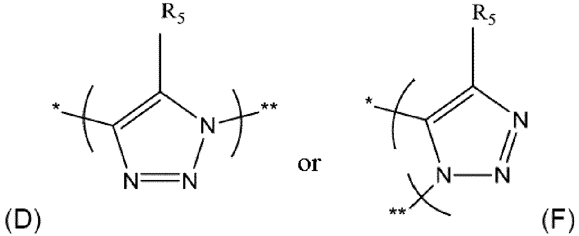
* indicating a point of bonding to an E block of the copolymer,
** indicating a point of bonding to a P block of the copolymer,
R₅ denoting a hydrogen atom, a C₁-C₅ alkyl group, a cycloalkyl group, a C₆-C₁₅ aryl group, a C₇-C₁₅ arylalkyl group or a protective group for alkyne functional groups,
X denotes a monovalent radical chosen from a C₁-C₁₅ alkyl radical, a C₅-C₁₅ cycloalkyl radical, a C₆-C₁₅ aryl radical, a C₇-C₁₅ arylalkyl radical or a radical resulting from a functionalization agent comprising at least one atom chosen from O, N, Si or Sn,
m is an integer ranging from 1 to 12.

4. Composition according to any one of Claims 1 to 3, **characterized in that** L is a divalent hydrocarbon group corresponding to one of the following formulae D1 and F1: 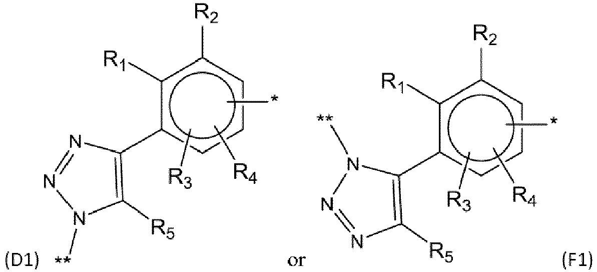 in which:
R₁ and R₂, and also R₃ and R₄, which can be borne by the ortho, meta or para position, denote, independently of one another, a hydrogen atom, a C₁-C₁₅ alkyl group, a C₅-C₁₅ cycloalkyl group, a C₆-C₁₅ aryl group or a C₇-C₁₅ arylalkyl group which can be separated from the aromatic nucleus by a heteroatom, such as O or S, and R₁, R₂, R₃ and R₄ each preferably denote a hydrogen atom,
R₅, denotes a hydrogen atom, a C₁-C₅ alkyl group, a cycloalkyl group, a C₆-C₁₅ aryl group, a C₇-C₁₅ arylalkyl group or a protective group for alkyne functional groups, and
* indicates a point of bonding to an E block of the copolymer which is located in the ortho, meta or para position with respect to the triazolediyl group,
** indicates a point of bonding to a P block of the copolymer.

5. Composition according to any one of Claims 1 to 4, **characterized in that** E is chosen from polybutadienes (BR), synthetic polyisoprenes (IR) butadiene/styrene copolymers (SBR), isoprene/butadiene copolymers (BIR), isoprene/styrene copolymers (SIR) and isoprene/butadiene/styrene copolymers (SBIR).

6. Composition according to any one of Claims 1 to 5, **characterized in that** P is a diene elastomer, a polyacrylate or a polystyrene.

7. Vehicle tyre, one of the constituent components of which comprises a rubber composition as defined in any one of Claims 1 to 6.
